# EUROPEAN PATENT SPECIFICATION

(11) **EP 1 161 861 B1**
(45) Date of publication and mention of the grant of the patent: **10.12.2003**
(21) Application number: 01201295.1
(22) Date of filing: 09.04.2001
(51) Int. Cl.: A01K 5/02, A01K 5/01

(54) **An implement for automatically detaching and displacing an amount of feed, such as for example silage or hay**
Vorrichtung zur automatischen Abtrennung und Förderung einer Futterquantität, wie z. B. Silage oder Heu
Dispositif pour détacher et déplacer automatiquement une quantité de fourrage, tel que, par exemple, d'ensilage ou du foin

(30) Priority: 09.06.2000 NL 1015403
(43) Date of publication of application: 12.12.2001
(73) Proprietor: Lely Enterprises AG, 6300 ZUG (CH)
(72) Inventor: Sie, Howard, 3037 VC Rotterdam (NL); Voogd, Eliza Niels, 4143 VC Leerdam (NL); Van den Berg, Karel, 2971 BR Bleskensgraaf (NL)
(74) Representative: Corten, Maurice Jean F.M.

(56) References cited:
- EP-A- 0 721 732
- WO-A-00/38505
- WO-A-97/31524
- DE-A- 3 921 871
- GB-A- 2 239 960
- US-A- 1 333 387
- US-A- 3 804 448

## Description

The invention relates to a feeding column according to the preamble of claim 1, see e.g. document WO-A-00/38505. A feeding column according to claim 1 has the advantage that, in a simple manner, a measured out amount of feed, in particular fodder that is difficult to handle, such as silage or hay, can be detached from a stock of feed and be displaced to a predetermined place. In particular in relation to the known constructions, in which for example an auger is used, the above-mentioned column has the advantage that with the aid of the robot arm various stocks of feed can simply be reached by the robot arm with the detaching member.

According to a further inventive feature, the detaching member comprises a gripping element. The gripping element has the advantage of being less sensitive to clogging. A gripping element has the further advantage of making it possible for example to detach a tuft of hay from a bale of hay.

In a preferred embodiment of the invention, the detaching member comprises a bucket or a shovel. By means of the bucket or the shovel it is in particular possible to detach in a simple manner blocks of concentrate from a stock of feed.

According to another inventive feature, the detaching member is capable of being closed. Especially when granular or pulverulent material has to be detached from a stock of feed, it is of importance that the detaching member can be closed for the purpose of preventing loss of feed during transport.

In order to prevent the detaching member from being contaminated, the robot arm is provided with cleaning and/or brushing means for the detaching member. In a preferred embodiment of the invention, the cleaning and/or brushing means comprise a sweeping element. For the purpose of being able to detach from the stock a previously measured out portion of feed, the implement comprises metering means.

According to again another inventive feature, the implement comprises weighing means for weighing said portion of feed. According to a further inventive feature, the robot arm comprises the weighing means. In order to be able to determine where and when a particular amount of feed can be deposited by the robot arm with the detaching member, the implement comprises animal identification means, with the aid of which an animal can be identified. According to a further inventive feature, the animal identification means are fitted on the robot arm. This measure has the advantage that, for example in the situation that a feeding column with various feeding troughs is used, it is not necessary to provide each feeding trough with animal identification means.

According to again another inventive feature, the implement is provided with a chute via which the feed can be discharged to a relevant feeding and/or watering trough. In an embodiment of the invention, the robot arm has such dimensions that the detaching member can move over and/or along the bottom of the container and/or the feeding and/or watering trough. Thus it is possible to take the last remnants of feed from the container or the trough. In order to be able also to use the robot arm for example in a loose house, the robot arm is at least movable over the floor of the stable. In a preferred embodiment of the invention, the robot arm is movable along a rail. It will be obvious that it is also possible to dispose the robot arm for example on belts, such as caterpillar tracks, and to move it in this manner through the stable. According to again another embodiment of the invention the implement comprises one or more transport vehicles that co-operate with the robot arm. Thus it is possible, for example in a stable, to convey by means of the transport vehicles the feed that has been detached to a particular place and to deposit it there. In a preferred embodiment of the invention the transport vehicles are movable along a rail.

According another preferred embodiment the robot arm is rotatable about a vertical axis.

In another embodiment a stepper motor is provided for rotating the robot arm about the vertical axis.

The invention will now be explained in further detail with reference to the accompanying drawings, in which:
Figure 1 is a cross-section of the implement according to the invention;
Figure 2 is a second embodiment of an implement according to the invention, and
Figure 3 is a plan view of a loose house in which a third embodiment of the implement is depicted.

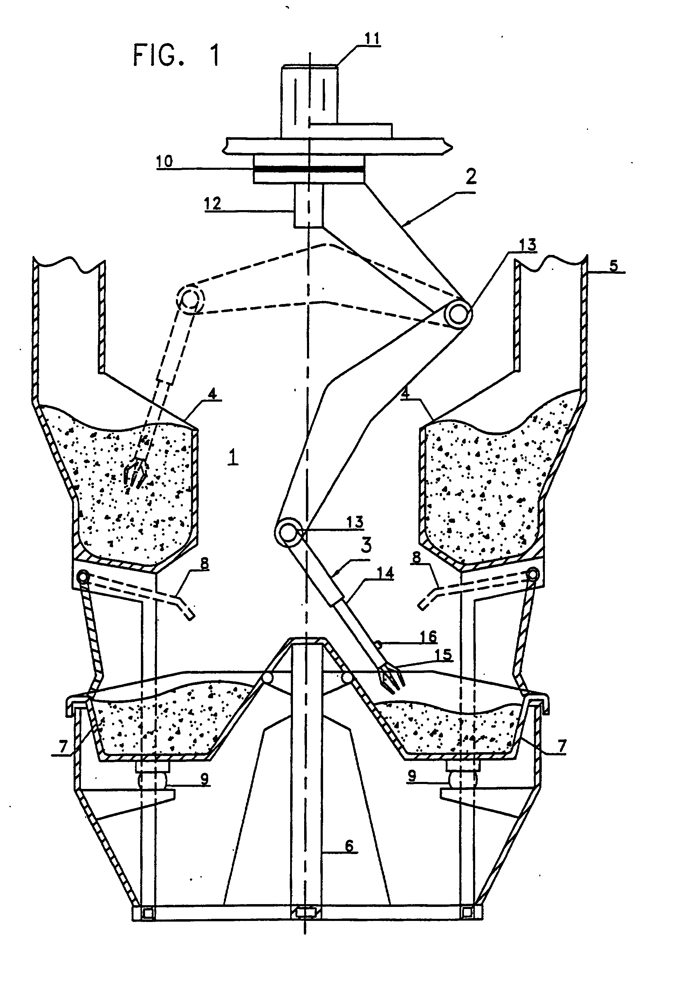

Figure 1 is a cross-section of an implement 1 for automatically detaching and displacing an amount of feed. The implement 1 is provided with a robot arm 2 with a detaching member 3 which is suitable for detaching feed from containers 4 that are integrated in a feeding column 5. The feeding column 5 comprises feeding and/or watering troughs 7 that are disposed around a central axis 6 and from which animals, such as cows for example, can eat and/or drink. Each of the feeding troughs 7 is capable of being closed separately by means of a closing member 8 which is constituted by a lid in the present embodiment. Under each of the feeding troughs 7 there is disposed a load cell 9 with the aid of which the weight of a relevant feeding trough can be determined. As shown in Figure 1, the robot arm is arranged centrally above the containers 4. This measure has the advantage that the robot arm 2 with the detaching member 4 can reach in a simple manner all the containers 4, as well as the feeding troughs 7. The robot arm 2 is also provided with a weighing device 10 which is designed as a load cell in the present embodiment. By means of the weighing device 10 it is possible to determine each time how much feed is taken from a container 4 and deposited in a particular feeding trough 7. The robot arm 2 is further provided with a first stepper motor 11 with the aid of which the robot arm 2 can be rotated about a vertical axis 12. The robot arm 2 is further provided with two further stepper motors 13 with the aid of which the robot arm can be positioned in the vertical plane. The end of the robot arm 2 comprises a telescopic cylinder 14. In the present embodiment the detaching member 3 is designed as a gripper 15 with the aid of which feed can be seized and be released. Near the detaching member 3 there is further disposed an animal identification system 16 which makes it possible to recognize an animal that is standing near one of the troughs 7. By means of the animal identification system 16 and a (non-shown) computer it can thus be determined whether or not an animal that is waiting near a feeding trough 7 will be fed. Upon feeding the animals it is possible to compose a meal of feed from various containers 4 for a relevant animal. The gripper is particularly appropriate when roughage, such as for example silage or hay, has to be taken from a container 4. It will be obvious that it is also possible, of course, when remnants of feed are still present in the feeding troughs 7 after a particular animal has eaten there, to take these remnants back by means of the robot arm 2 and to displace them to a relevant container 4 and deposit them there.

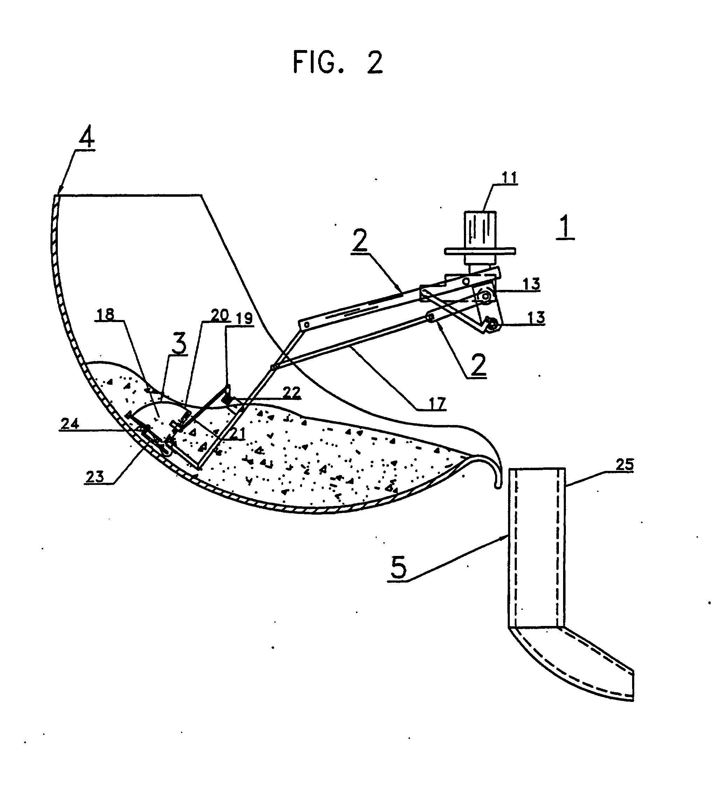

Figure 2 shows a second embodiment of an implement 1 for automatically detaching and displacing an amount of feed from a container 4 of a (not completely depicted) feeding column 5. In the present embodiment the robot arm 2 is differently designed than the robot arm 2 according to Figure 1. However, corresponding parts are indicated by the same reference numerals. By means of the upper stepper motor 13 it is possible to move the detaching member 3 along the curved lines of the container 4, while the lower stepper motor 13 makes it possible to move the entire robot arm 2 upwards or downwards. To allow the latter movements, the robot arm 2 comprises a quadrangular pivot construction 17. In the present embodiment the detaching member 3 comprises a bucket 18 which is disposed at the end of the robot arm 2. With the aid of the bucket 18 feed can be scooped from the container 4. By means of a closing mechanism 19 it is possible to close the bucket 18 after the latter has been filled completely, so that feed is prevented from falling from the bucket during transport. For that purpose the closing mechanism 19 comprises a closing lid 20 which is connected by means of a steering rod 21 to a stepper motor 22 which, after having been energized, causes the bucket 18 to be closed or opened. The closing mechanism 19 is further coupled with cleaning means 23 that are moved along the bottom and/or along the walls of the bucket 18 during opening and/or closing of said bucket 18. For that purpose the cleaning means 23 comprise a brushing element 24. When the bucket 18 has been filled completely, said bucket 18 is moved by means of the robot arm 2 to a chute 25 where the feed is poured into the chute 25 by activating the closing mechanism 19. Via the chute 25 the feed is poured into a predetermined and not further shown feeding trough, such as the feeding trough 7 in Figure 1. By means of torque measurements on the stepper motors 11 and/or 13 it is possible to determine whether the bucket is full or empty during detaching feed from the containers 4. It will be obvious that the implement according to Figure 2 can be completely integrated in the feeding column 5 as shown in Figure 1.

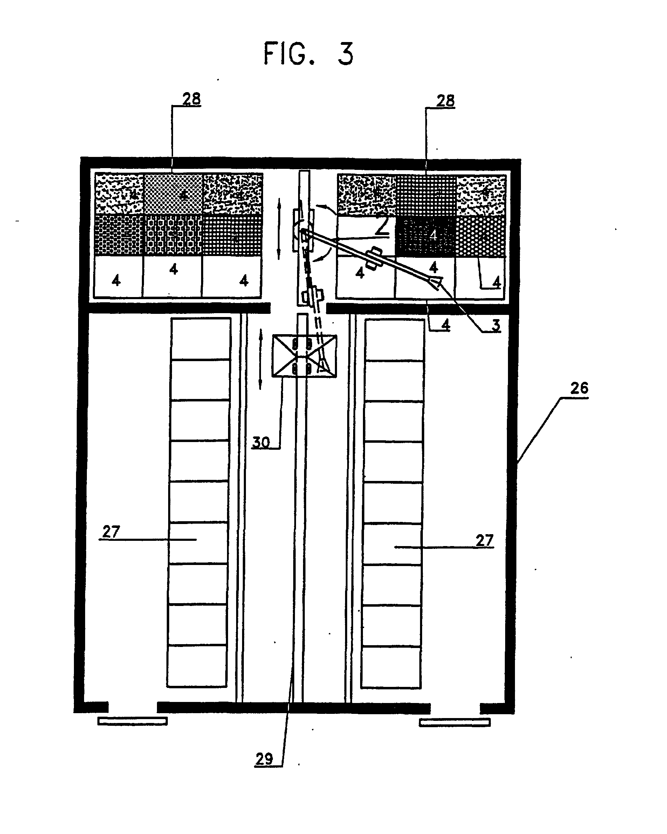

Figure 3 is a plan view of a stable 26 with a third embodiment of an implement 1 arranged therein. The stable 26 comprises two rows of feed stands/cubicles 27 and at the end thereof two storage areas 28 for storing roughage and/or concentrate. The storage areas 28 each comprise a plurality of containers 4 for storing various sorts of fodder and/or drink. Between the two rows of feed stands 27 and the storage areas 28 there is disposed a rail 29 along which a transport vehicle 30 can be moved automatically under computer-control. By means of the robot arm 2 feed can be deposited from a container 4 into the transport vehicle 30 by means of the detaching member 3. The robot arm 2 of the implement 1 in Figure 1 may be designed as the robot arm in Figure 1 or Figure 2. The robot arm 2 is also automatically movable under computer-control along the rail 29. With the aid of (non-shown) animal identification means it is thus possible to convey feed to a predetermined feed stand both by means of the robot arm 2 and the transport vehicle 30. It will be obvious that it is also possible to arrange a stationary robot arm 2 between the storage areas 28 and to convey the feed to a particular place only by means of the transport vehicle 30.

## Claims

1. A feeding column provided with various feeding and/or watering troughs (7) being disposed around a central axis (6) and provided with a metering device for dosing feed , **characterized in that** said metering device comprises an implement (1) for automatically detaching and displacing an amount of feed, such as for example silage or hay, from a stock of feed, said implement comprising a detaching member (3) which is suitable for detaching a part of feed from the stock and displacing it to a predetermined place and disposit it there, said implement being provided with a robot arm (2) comprising the detaching member (3).

2. A feeding column as claimed in claim 1, **characterized in that** the detaching member (3) comprises a gripping element (15).

3. A feeding column as claimed in claim 1 or 2, **characterized in that** the detaching member (3) comprises a bucket (18) or a shovel.

4. A feeding column as claimed in any one of the preceding claims, **characterized in that** the detaching member (3) is capable of being closed.

5. A feeding column as claimed in any one of the preceding claims, **characterized in that** the robot arm (2) is provided with cleaning and/or brushing means (23, 24) for the detaching member (3).

6. A feeding column as claimed in claim 5, **characterized in that** the cleaning and/or brushing means (23, 24) comprise a sweeping element (24).

7. A feeding column as claimed in any one of the preceding claims, **characterized in that** the implement comprises metering means (9; 10) with the aid of which a predetermined measured out portion of feed can be detached.

8. A feeding column as claimed in any one of the preceding claims, **characterized in that** the implement comprises weighing means (9; 10) for weighing said portion of feed.

9. A feeding column as claimed in claim 8, **characterized in that** the robot arm (2) comprises the weighing means (10).

10. A feeding column as claimed in any one of the preceding claims, **characterized in that** the implement comprises animal identification means (16) with the aid of which an animal can be identified.

11. A feeding column as claimed in claim 10, **characterized in that** the animal identification means (16) are fitted on the robot arm (2).

12. A feeding column as claimed in any one of the preceding claims, **characterized in that** the implement comprises at least one container (4) for storing the fodder and/or drink.

13. A feeding column as claimed in claim 12, **characterized in that** the robot arm (2) is disposed above the feeding and/or watering trough (7) and/or above the container (4) .

14. A feeding column as claimed in claim 12 or 13, **characterized in that** the implement is provided with a chute (25) via which the feed can be discharged to a relevant feeding and/or watering trough (7).

15. A feeding column as claimed in any one of the preceding claims, **characterized in that** the robot arm (2) has such dimensions that the detaching member (3) can move over and/or along the bottom of the container (4) and/or the feeding and/or watering trough (7).

16. A feeding column as claimed in any one of the preceding claims, **characterized in that** at least the robot arm (2) is movable over a floor.

17. A feeding column as claimed in claim 16, **characterized in that** the robot arm (2) is movable along a rail (29).

18. A feeding column as claimed in any one of claims 1 to 15, **characterized in that** the implement comprises one or more transport vehicles (30) that co-operate with the robot arm (2) .

19. A feeding column as claimed in claim 18, **characterized in that** the transport vehicles (30) are movable along a rail (29) .

20. A feeding column as claimed in any one of the preceding claims, **characterized in that** the robot arm (2) is rotatable about a vertical axis (12)

21. A feeding column as claimed in claim 20, **characterized in that** a stepper motor (11) is provided for rotating the robot arm (2) about the vertical axis (12).

## Patentansprüche

1. Futtersäule mit verschiedenen Futter- und/oder Tränktrögen (7), die um eine Mittelachse (6) herum angeordnet und mit einer Dosiervorrichtung zum Dosieren von Futter versehen sind,
**dadurch gekennzeichnet, daß** die Dosiervorrichtung eine Vorrichtung (1) zur automatischen Entnahme und Verlagerung einer Futtermenge, wie z. B. Silage oder Heu, aus einem Futtervorrat umfaßt, wobei die Vorrichtung ein Entnahmeglied (3) umfaßt, das geeignet ist, einen Teil des Futters aus dem Vorrat zu entnehmen und ihn zu einem vorgegebenen Ort zu verlagern und dort abzulegen, wobei die Vorrichtung mit einem das Entnahmeglied (3) umfassenden Roboterarm (2) versehen ist.

2. Futtersäule nach Anspruch 1,
**dadurch gekennzeichnet, daß** das Entnahmeglied (3) ein Greifelement (15) umfaßt.

3. Futtersäule nach Anspruch 1 oder 2,
**dadurch gekennzeichnet, daß** das Entnahmeglied (3) einen Becher (18) oder eine Schaufel umfaßt.

4. Futtersäule nach einem der vorhergehenden Ansprüche,
**dadurch gekennzeichnet, daß** das Entnahmeglied (3) verschließbar ist.

5. Futtersäule nach einem der vorhergehenden Ansprüche,
**dadurch gekennzeichnet, daß** der Roboterarm (2) mit Reinigungs- und/oder Bürstvorrichtungen (23, 24) für das Entnahmeglied (3) versehen ist.

6. Futtersäule nach Anspruch 5,
**dadurch gekennzeichnet, daß** die Reinigungs- und/oder Bürstvorrichtung (23, 24) ein Kehrelement (24) umfaßt.

7. Futtersäule nach einem der vorhergehenden Ansprüche,
**dadurch gekennzeichnet, daß** die Vorrichtung Dosiervorrichtungen (9; 10) umfaßt, mit deren Hilfe eine vorgegebene abgemessene Futterportion entnommen werden kann.

8. Futtersäule nach einem der vorhergehenden Ansprüche,
**dadurch gekennzeichnet, daß** die Vorrichtung Wägevorrichtungen (9; 10) zum Wiegen der Futterportion umfaßt.

9. Futtersäule nach Anspruch 8,
**dadurch gekennzeichnet, daß** der Roboterarm (2) die Wägevorrichtung (10) umfaßt.

10. Futtersäule nach einem der vorhergehenden Ansprüche,
**dadurch gekennzeichnet, daß** die Vorrichtung eine Tieridentifikationsvorrichtung (16) umfaßt, mittels der ein Tier identifiziert werden kann.

11. Futtersäule nach Anspruch 10,
**dadurch gekennzeichnet, daß** die Tieridentifikationsvorrichtung (16) an dem Roboterarm (2) angebracht ist.

12. Futtersäule nach einem der vorhergehenden Ansprüche,
**dadurch gekennzeichnet, daß** die Vorrichtung mindestens einen Behälter (4) zur Aufnahme des Futters und/oder der Trinkflüssigkeit umfaßt.

13. Futtersäule nach Anspruch 12,
**dadurch gekennzeichnet, daß** der Roboterarm (2) über dem Futter- und/oder Tränktrog (7) und/oder über dem Behälter (4) angeordnet ist.

14. Futtersäule nach Anspruch 12 oder 13,
**dadurch gekennzeichnet, daß** die Vorrichtung mit einer Rutsche (25) versehen ist, über die das Futter in einen entsprechenden Futter- und/oder Tränktrog (7) geleitet werden kann.

15. Futtersäule nach einem der vorhergehenden Ansprüche,
**dadurch gekennzeichnet, daß** der Roboterarm (2) so bemessen ist, daß sich das Entnahmeglied (3) über und/oder entlang des Bodens des Behälters (4) und/oder des Futter- und/oder Tränktroges (7) bewegen kann.

16. Futtersäule nach einem der vorhergehenden Ansprüche,
**dadurch gekennzeichnet, daß** zumindest der Roboterarm (2) über einen Boden bewegbar ist.

17. Futtersäule nach Anspruch 16,
**dadurch gekennzeichnet, daß** der Roboterarm (2) entlang einer Schiene (29) bewegbar ist.

18. Futtersäule nach einem der Ansprüche 1 bis 15,
**dadurch gekennzeichnet, daß** die Vorrichtung ein oder mehrere Transportfahrzeuge (30) umfaßt, die mit dem Roboterarm (2) zusammenwirken.

19. Futtersäule nach Anspruch 18,
**dadurch gekennzeichnet, daß** die Transportfahrzeuge (30) entlang einer Schiene (29) bewegbar sind.

20. Futtersäule nach einem der vorhergehenden Ansprüche,
**dadurch gekennzeichnet, daß** der Roboterarm (2) um eine vertikale Achse (12) drehbar ist.

21. Futtersäule nach Anspruch 20,
**dadurch gekennzeichnet, daß** zum Drehen des Roboterarmes (2) um die vertikale Achse (12) ein Schrittmotor (11) vorgesehen ist.

## Revendications

1. Colonne d'alimentation pourvue de plusieurs auges et/ou abreuvoirs (7) qui sont disposés autour d'un axe central (6) et pourvus d'un dispositif de mesure pour doser la nourriture, **caractérisée en ce que** ledit dispositif de mesure comprend un outil (1) pour détacher et déplacer automatiquement d'un stock de nourriture, telle que par exemple du fourrage ensilé ou du foin, une quantité de celle-ci, ledit outil comprenant un bras de prélèvement (3) qui convient pour détacher une portion de nourriture du stock, la déplacer à un endroit prédéterminé et l'y déposer, ledit outil étant pourvu d'un bras robotisé (2) comprenant le bras de prélèvement (3).

2. Colonne d'alimentation selon la revendication 1, **caractérisée en ce que** le bras de prélèvement (3) comprend un élément de préhension (15).

3. Colonne d' alimentation selon la revendication 1 ou 2, **caractérisée en ce que** le bras de prélèvement (3) comprend un seau (18) ou une pelle.

4. Colonne d'alimentation selon l'une quelconque des revendications précédentes, **caractérisée en ce que** le bras de prélèvement (3) peut être fermé.

5. Colonne d'alimentation selon l'une quelconque des revendications précédentes, **caractérisée en ce que** le bras robotisé (2) est pourvu de moyens de nettoyage et/ou de brossage (23, 24) pour le bras de prélèvement (3).

6. Colonne d' alimentation selon la revendication 5, **caractérisée en ce que** les moyens de nettoyage et/ou de brossage (23, 24) comprennent un élément de balayage (24).

7. Colonne d'alimentation selon l'une quelconque des revendications précédentes, **caractérisée en ce que** l'outil comprend des moyens de mesure (9, 10) à l'aide desquels on peut prélever une ration de nourriture prédéterminée et mesurée.

8. Colonne d'alimentation selon l'une quelconque des revendications précédentes, **caractérisée en ce que** l'outil comprend des moyens de pesage (9, 10) pour peser ladite ration de nourriture.

9. Colonne d' alimentation selon la revendication 8, **caractérisée en ce que** le bras robotisé (2) comprend les moyens de pesage (10).

10. Colonne d'alimentation selon l'une quelconque des revendications précédentes, **caractérisée en ce que** l'outil comprend des moyens d'identification (16) à l'aide desquels on peut identifier un animal.

11. Colonne d'alimentation selon la revendication 10, **caractérisée en ce que** les moyens d'identification de l'animal (16) sont fixés sur le bras robotisé (2).

12. Colonne d'alimentation selon l'une quelconque des revendications précédentes, **caractérisée en ce que** l'outil comprend au moins un récipient (4) pour stocker le fourrage et/ou la boisson.

13. Colonne d'alimentation selon la revendication 12, **caractérisée en ce que** le bras robotisé (2) est disposé au-dessus de l'auge et/ou de l'abreuvoir (7) et/ou au-dessus du récipient (4).

14. Colonne d'alimentation selon la revendication 12 ou 13, **caractérisée en ce que** l'outil est pourvu d'une gouttière (25) par laquelle on peut déverser la nourriture dans une auge et/ou un abreuvoir (7) pertinent.

15. Colonne d'alimentation selon l'une quelconque des revendications précédentes, **caractérisée en ce que** le bras robotisé (2) a des dimensions telles que le bras de prélèvement (3) peut se déplacer au-dessus et/ou le long du fond du récipient (4) et/ou de l'auge et/ou de l'abreuvoir (7).

16. Colonne d'alimentation selon l'une quelconque des revendications précédentes, **caractérisée en ce qu'**au moins le bras robotisé (2) est mobile au-dessus d'un sol.

17. Colonne d'alimentation selon la revendication 16, **caractérisée en ce que** le bras robotisé (2) est mobile le long d'un rail (29).

18. Colonne d'alimentation selon l'une quelconque des revendications 1 à 15, **caractérisée en ce que** l'outil comprend un ou plusieurs véhicules de transport (30) qui fonctionnent en même temps que le bras robotisé (2).

19. Colonne d'alimentation selon la revendication 18, **caractérisée en ce que** les véhicules de transport (30) sont mobiles le long d'un rail (29).

20. Colonne d' alimentation selon l'une quelconque des revendications précédentes, **caractérisée en ce que** le bras robotisé (2) peut tourner autour d'un axe vertical (12).

21. Colonne d'alimentation selon la revendication 20, **caractérisée en ce qu'**un moteur pas à pas (11) est prévu pour faire tourner le bras robotisé (2) autour de l' axe vertical (12).
